# EUROPÄISCHE PATENTSCHRIFT

(11) **EP 3 051 023 B1**
(45) Veröffentlichungstag und Bekanntmachung des Hinweises auf die Patenterteilung: **14.03.2018**
(21) Anmeldenummer: 16152619.9
(22) Anmeldetag: 25.01.2016
(51) Int. Cl.: D06N 3/00, B32B 27/12, B32B 27/30, B32B 27/40, D06N 3/06, D06N 3/10, D06N 3/14, C08L 97/00

(54) **KORKPARTIKELHALTIGE FOLIE, KORKPARTIKELHALTIGES KUNSTLEDER UND VERFAHREN ZUR HERSTELLUNG DERSELBEN**
FILM CONTAINING CORK PARTICLES , ARTIFICIAL LEATHER CONTAINING CORK PARTICLES AND METHOD FOR PRODUCING THE SAME
FEUILLE CONTENANT DES PARTICULES DE LIEGE, CUIR SYNTHETIQUE COMPRENANT DES PARTICULES DE LIEGE ET SON PROCEDE DE FABRICATION

(30) Priorität: 29.01.2015 DE 102015101333
(43) Veröffentlichungstag der Anmeldung: 03.08.2016
(73) Patentinhaber: Bayerische Motoren Werke Aktiengesellschaft, 80809 München (DE); TMG Automotive, 4770-583 S. Cosme do Vale, V.N. Famalicao (PT)
(72) Erfinder: Witek, Wolfgang, 85304 Ilmmünster (DE); Kasner, Alen, 81677 München (DE); Boewingloh, Maria, 80798 München (DE); Pinho, Elizabete, 4050-300 Porto (PT); Goncalves Lobo, Maria Irene, 4700-028 Braga (PT); Rodrigues Aguia, António César, 4410-104 Sao Félix da Marinha (PT); da Silva Maia, Tiago Filipe, 4805-230 Ponte-Guimaraes (PT)
(74) Vertreter: Patentanwälte Bals & Vogel

(56) Entgegenhaltungen:
- EP-A2- 0 140 675
- WO-A1-2011/149370
- DE-A1- 10 244 709
- DE-B- 1 074 001
- DE-U1- 7 933 481
- JP-A- 2001 315 280

## Beschreibung

Die Erfindung betrifft eine korkpartikelhaltige Folie, ein korkpartikelhaltige Kunstleder und ein Verfahren zur Herstellung derselben, insbesondere zur Verwendung an einem Interieurbauteil eines Fahrzeugs.

Interieurbauteile in Fahrzeugen müssen besonderen Anforderungen genügen. Sie sollen einen ansprechenden und wertigen Eindruck vermitteln und eine große Haltbarkeit aufweisen. Hierzu werden die Bauteile mit einer entsprechend gestalteten Oberfläche versehen. Häufig werden hierzu Bezugsmaterialien in Form von Echt- oder Kunstleder oder Dekormaterialien in Form von Kunststofffolien verwendet.

Es besteht ein Bedarf an Bezugsmaterialien, die ein innovatives und individuelles Erscheinungsbild bei gleichzeitig guten haptischen Eigenschaften aufweisen. Zudem besteht der Wunsch nach einer gesteigerten Nachhaltigkeit bei der Auswahl der verwendeten Materialien.

In Konzeptfahrzeugen findet man gelegentlich Oberflächen, die aus Kork gearbeitet sind. Dies spiegelt das Interesse der Fahrzeugentwickler und Designer an diesem Material wieder.
Jedoch gibt es bislang nur wenige Ansätze, Kork im Inneren von großindustriellproduzierten Fahrzeugen zu verwenden.

So schlägt die Druckschrift JP H01 122 776 A beispielsweise vor, in die äußere Farbschicht eines Lenkrades Korkpartikel mit einzumischen, um die Wasseraufnahmeeigenschaften und Haptik des Lenkrads zu verbessern.

Weiterhin ist die Verwendung von Kork als strukturgebendes Tafelelement im Inneren einer Sonnenblende aus der Druckschrift DE 198 34 999 A1 bekannt.

Aus der Druckschrift GB 1 092 987 A ist ein Fahrzeughimmel bekannt, der aus Korkpartikeln hergestellt wird, die zunächst mit Polyurethan imprägniert und dann in einem Formpressverfahren zu dem gewünschten Formteil gepresst werden.

Insgesamt ist es bekannt, unter Verwendung von Korkpartikeln Erzeugnisse mit einer Schichtstruktur herzustellen. Diese Erzeugnisse können sowohl flexibel und folienartig, siehe beispielsweise die WO 2011/149 370 A1, als auch steif und plattenartig, siehe zum Beispiel die DE 79 33 481 U1, ausgebildet sein.

Ein Grund für die nur eingeschränkte Verwendung von Kork zur Gestaltung von Fahrzeuginnenflächen ist seine begrenzte Lichtstabilität, weshalb Kork unter Bestrahlung ausbleicht.

Des Weiteren ist die Verwendung von Korkmehl in einem Lederaustauschstoff aus dem Dokument DE 1 043 275 A bekannt. In diesem Dokument wird eine wildlederartige Oberfläche erzeugt, indem Korkmehl mit Polyurethan als Bindemittel in einem Mischungsverhältnis von mindestens 1 zu 2 gemischt wird. Als wesentlich zur Erzielung der wildlederartigen Oberfläche wird dabei angegeben, dass sich nur Stege aus Bindemittel zwischen den einzelnen Korkteilchen bilden, ohne die Zwischenräume auszufüllen. Dieser Lederaustauschstoff mit der beschriebenen stegartigen Struktur der Kunststoffschicht weist nur eine geringe Festigkeit auf und ist empfindlich gegenüber Verschmutzung und Ausbleichen des Korkmehls. Ein ähnlicher Lederaustauschstoff ist aus der DE 10 74 001 B bekannt, wobei hier insbesondere eine Oberfläche des Lederaustauschstoffes mit einer Narbenprägung versehen ist.

Weiterhin ist es aus der Druckschrift WO 2008/115 086 A1 bekannt, das Volumen von Korkpartikeln durch eine Behandlung mit Mikrowellenstrahlung zu vergrößern. Die Volumenzunahme führt zu einem höheren Ertrag und einem geringeren spezifischen Gewicht der Korkpartikel.

Aufgabe der Erfindung ist es, ein flexibles Bezugsmaterial und ein Verfahren zur Herstellung desselben anzugeben, das den Anforderungen an eine innovative Optik und angenehme Haptik genügt und sich insbesondere zur Verwendung an einem Interieurbauteil eines Fahrzeugs eignet. Das Bezugsmaterial soll sich kostengünstig und großindustriell herstellen lassen.

Gelöst wird diese Aufgabe durch ein Verfahren nach Patentanspruch 1, eine Folie nach Patentanspruch 12, ein Kunstleder nach Patentanspruch 13 sowie die Verwendung nach Patentanspruch 19. Weitere Ausgestaltungen ergeben sich aus den Unteransprüchen.

Bei dem Verfahren zur Herstellung einer korkhaltigen Folie oder eines korkhaltigen Kunstleders mit einer Schichtstruktur mit mindestens einer Schicht auf Basis von Polyurethan oder Polyvinylchlorid und einer Oberflächenlackierung erfolgt eine Vorbehandlung der Korkpartikel zur Reduzierung des Wasseranteils in den Korkpartikeln. Ein Ausgangsmaterial zur Schichtherstellung wird zubereitet, und die Schichtstruktur wird hergestellt, wobei zumindest eine Schicht der Schichtstruktur aus dem Ausgangsmaterial ausgebildet wird. Auf der Schichtstruktur wird die Oberflächenlackierung durch Aufbringen eines Lackes ausgebildet, wobei die Korkpartikel in das Ausgangsmaterial oder in den Lack oder in das Ausgangsmaterial und den Lack eingemischt sind.

Durch die Korkpartikel, welche eine geringe Wärmeleitfähigkeit und gute Isolationseigenschaften aufweisen, wird eine angenehme Haptik der Folie bzw. des Kunstleders erzielt. Durch das Einmischen von Korkpartikel können neuartige optische Wirkungen erzielt werden. Auch wird die Nachhaltigkeit des Materials gesteigert, da Abfallprodukte aus der Korkproduktion als Korkpartikel verwendet werden können.

Es hat sich gezeigt, dass der Wasseranteil im Kork einen erheblichen Einfluss auf die Güte der korkhaltigen Materialschicht ausübt. Eine zu hohe Restfeuchte im Kork führt zu unerwünschten Nebenreaktionen während der Vernetzung der Kunststoffschichten, wie z.B. einer unerwünschten Blasenbildung. Durch die Verwendung von Korkpartikeln mit bekannter Restfeuchte wird die Prozesssicherheit und Reproduzierbarkeit gesteigert. Die mechanischen Eigenschaften der korkhaltigen Schicht lassen sich insbesondere reproduzierbar einstellen, wenn der Wasseranteil im Kork in einer Ausgestaltung auf oder unter einen vorgegebenen Grenzwert reduziert wird. Je nach Art der Schicht, in der die Korkpartikel angeordnet werden, können unterschiedliche Grenzwerte sinnvoll sein. So wird z.B. bei einer kompakten korkpartikelhaltigen Schicht der Restwassergehalt in den Korkpartikeln vorzugsweise auf einen Grenzwert von fünf Gewichtsprozent oder weniger reduziert. Bei einer geschäumten Schicht liegt der Grenzwert für den Restwassergehalt vorzugsweise ebenfalls bei 5 Gewichtsprozent.

Das Ausgangsmaterial kann z.B. in Form eines Emulsions-PVCs, z.B. eines Plastisols, eines Suspensions-PVCs oder einer PUR-Dispersion, z.B. als PUR-Suspension, PUR-Emulsion, high solid, ... bereitgestellt werden. Das Ausgangsmaterial kann neben Polyurethan (PUR) bzw. Polyvinylchlorid (PVC) weitere Inhaltsstoffe enthalten, wie z.B. Weichmacher, Beschleuniger, Vernetzer oder weitere Zusatzstoffe. Wenn die Schichtstruktur mehr als eine Schicht enthält, so können für verschiedene Schichten verschiedene Ausgangsmaterialien verwendet werden, z.B. Ausgangsmaterialien mit und ohne Kork oder mit unterschiedlichen Zusammensetzungen.

Das Ausbilden der Schichtstruktur kann vorteilhafter Weise mit herkömmlichen Anlagen der Beschichtungstechnik erfolgen, somit ist eine kostengünstige und großindustrielle Herstellung der Folie bzw. des Kunstleders möglich. Vorzugsweise wird, wenn das Ausgangsmaterial auf Emulsions-PVC (Plastisol) oder einer PUR-Dispersion (PUR-Suspension, PUR-Emulsion, high solid, ...) basiert, ein Streichverfahren, wie z.B. ein Rakelverfahren oder Walzenverfahren verwendet. Basiert das Ausgangsmaterial auf einem Suspensions-PVC, so kommt vorzugsweise ein Extrusions- und / oder Kalanderverfahren zum Einsatz.

Die Ausbildung der Schichtstruktur kann in Abhängigkeit des verwendeten Ausgangsmaterials mit verschiedenen Auftragsverfahren erfolgen. Zur Herstellung einer Folie wird die Schichtstruktur vorzugsweise auf einem Trägermaterial, z.B. Releasepaper, ausgebildet. Für die Herstellung eines Kunstleders kann die Schichtstruktur sowohl im Direktverfahren als auch im Umkehrverfahren ausgebildet werden. Beim Direktverfahren wird die Schichtstruktur direkt auf einem textilen Trägermaterial ausgebildet und verbindet sich mit diesem, wohingegen beim Transferverfahren die Schichtstruktur zunächst auf einem Trägermaterial ausgebildet wird und dann mittels Kaschierung mit dem textilen Trägermaterial verbunden wird.

Das Ausbilden der Oberflächenlackierung erfolgt durch Aufbringen eines Lackes in einem oder vorzugsweise mehreren Aufträgen. Der Lackauftrag erfolgt vorzugsweise mittels Tiefdruck kann aber auch mit anderen Verfahren erfolgen, wie z.B. Walzenauftrag, Sprühauftrag oder in einem Prägeschritt zur Oberflächenprägung.

Die Vorbehandlung zur Reduzierung der Restfeuchte kann z.B. eine Trocknung der Korkpartikel beinhalten. Die Trocknungstemperatur und Trocknungszeit hängen voneinander und von der Anfangsfeuchtigkeit der Korkpartikel ab. Vorzugsweise liegt die Trocknungstemperatur in einem Bereich von 50°C bis 160°C, besonders bevorzugt findet die Trocknung in einem Temperaturbereich von 80°C bis 120°C statt, um eine Farbveränderung der Korkpartikel zu vermeiden. Die Trocknungszeit liegt vorzugsweise in einem Bereich von 30 Minuten und einer Woche. Um eine Farbveränderung der Korkpartikel zu vermeiden, liegt die Trocknungszeit vorzugsweise in einem Bereich von 1 Stunde bis zu 5 Stunden. Die Trocknung kann z.B. in einem Ofen erfolgen.

In einer Ausgestaltung werden die Korkpartikel im Rahmen der Vorbehandlung in einer Art erhitzt, dass zumindest teilweise eine Explosion der Korkpartikel stattfindet. Durch eine vergleichsweise schnelle und starke Erhitzung kommt es zu einem explosionsartigen Verdampfen des im Kork enthaltenen Wassers, wodurch die ursprüngliche Korkstruktur verändert wird. Durch die Explosion wird einerseits eine Trocknung des Korks erzielt. Zum anderen ist die veränderte Korkstruktur besonders geeignet, um Lufteinschlüsse im Kork zu vermeiden. Zudem wird der Kork aufgrund der hohen Temperaturen, die zur Explosion führen, teilweise zersetzt. Hierdurch kann die Gefahr einer Blasenbildung weiter reduziert werden.

Die Explosion der Korkpartikel wird in einer Ausgestaltung durch Wärmeübertragung auf die Korkpartikel herbeigeführt. Die hierzu notwendige Temperatur und Prozesszeit hängen voneinander und von der Anfangsfeuchtigkeit der Korkpartikel ab. Vorzugsweise liegt die Temperatur in einem Bereich von 170°C bis 230°C, besonders bevorzugt findet die Erhitzung auf eine Temperatur in einem Bereich von 185°C bis 200°C statt, um eine Farbveränderung der Korkpartikel zu vermeiden. Die Prozesszeit liegt bei dieser Vorbehandlung vorzugsweise in einem Bereich von 30 Sekunden und 5 Minuten. Um eine Farbveränderung der Korkpartikel zu vermeiden, erfolgt die Erhitzung vorzugsweise in einem Bereich von einer Minute bis zu zwei Minuten. Die Wärmeübertragung kann z.B. in einem Ofen erfolgen.

In einer weiteren Ausgestaltung erfolgt die Explosion der Korkpartikel aufgrund einer Bestrahlung der Korkpartikel mit Mikrowellenstrahlung. Die Bestrahlungsparameter hängen von der Art und Größe des Reaktors sowie der eingebrachten Korkmenge ab. Beispielsweise kann Mikrowellenstrahlung im Frequenzbereich von 300 MHz bis 300 GHz mit einer Mikrowellenleistung im Bereich von 100 Watt (W) bis 5000 W für einen Zeitraum von einer Sekunde bis zu einer Stunde, vorzugsweise von 10 Sekunden bis 15 Minuten, verwendet werden.

In einer weiteren Ausgestaltung erfolgt die Explosion der Korkpartikel aufgrund einer Bestrahlen der Korkpartikel mit Ultraschall, z.B. mit einer Frequenz von größer oder gleich 20 kHz über eine Dauer von einer Sekunde bis zu einer Stunde, vorzugsweise 10 Sekunden bis zu 15 Minuten, bei einer Leistung von 100 W bis 5000 W.

In einer weiteren Ausgestaltung ist es ebenso möglich, die Explosion der Korkpartikel durch eine Kombination aus Wärmeübertragung und Bestrahlung mit Mikrowellen und/oder Ultraschall zu erzielen.

In einer Ausgestaltung werden die getrockneten oder explodierten Korkpartikel in einem vordefinierten Zeitrahmen weiterverarbeitet, so dass der Wassergehalt in den Korkpartikeln unter einem vorgegebenen Restfeuchtegehalt bleibt. Der Zeitrahmen ist so definiert, dass eine erneute Wasseraufnahme der Korkpartikel durch die Umgebung vermieden bzw. auf ein tolerierbares Maß reduziert wird. Der vorgegebene Restfeuchtegehalt hängt von der Art des verwendeten Ausgangsmaterials und der geplanten Weiterverarbeitung ab. Beispielsweise werden die getrockneten und/oder explodierten Korkpartikel weiterverarbeitet, bevor ihr Restfeuchtegehalt über 5 Gewichtsprozent Wasseranteil ansteigt. Die Verarbeitungszeit ist stark von den Umgebungsbedingungen, u.a. der Luftfeuchtigkeit abhängig. Die Zeit bis zur Weiterverarbeitung sollte z.B. weniger als 24 Stunden betragen, vorzugsweise sollte die Weiterverarbeitung weniger als 10 Minuten nach der Vorbehandlung erfolgen. Die Weiterverarbeitung der Korkpartikel ist beispielsweise das Einmischen in das Ausgangsmaterial oder den Lack. Alternativ können die Korkpartikel auch durch weitere Vorbehandlungsschritte weiterverarbeitet werden.

Zur weiteren Verringerung bzw. Vermeidung einer Blasenbildung bei der PVC- bzw. PU-Filmbildung werden die Korkpartikel in einer Ausgestaltung im Rahmen der Vorbehandlung mit einer Flüssigkeit aus der Gruppe der Weichmacher oder organischen Lösungsmittel durchtränkt. Die Flüssigkeit wird von den Korkpartikeln absorbiert und Gas wird aus den Zellen und von der Oberfläche der Korkpartikel verdrängt. Die Mischung aus Korkpartikeln und Flüssigkeit kann z.B. eine pastöse Struktur haben. Vorzugsweise werden die Korkpartikel zunächst getrocknet bzw. zur Explosion gebracht und anschließend mit der Flüssigkeit getränkt.

Zur Erzielung einer verbesserten Lichtechtheit der Folie bzw. des Kunstleders wird in einer Ausgestaltung der Flüssigkeit weiterhin zumindest ein UV-Stabilisator und/oder UV-Filter zugesetzt. Die UV-Filter und/oder die UV-Stabilisatoren werden ebenfalls durch die Korkpartikel absorbiert oder adsorbiert und durchdringen bzw. umhüllen die Korkpartikel.

In einer Ausgestaltung erfolgt weiterhin eine Vakuumierung der Mischung aus Korkpartikeln und Flüssigkeit (mit oder ohne UV-Filtern oder UV-Stabilisatoren), um die Gasverdrängung zu beschleunigen. Die Dauer der Vakuumierung hängt von den Eigenschaften der Mischung und dem Massenanteil an Korkpartikeln in der Mischung ab. Die Vakuumierung erfolgt z.B. auf einen Druck von 30 Kilopascal oder weniger. Die Dauer der Vakuumierung kann z.B. zwischen 10 Minuten und fünf Stunden oder vorzugsweise zwischen 30 Minuten und einer Stunde liegen. Diese Vakuumierung kann auch zur Trocknung der Korkpartikel eingesetzt werden.

Zur Verbesserung der Lichtechtheit und Verhinderung eines späteren Ausbleichens der Korkpartikel unter Lichteinfluss werden die Korkpartikel in einer Ausgestaltung im Rahmen der Vorbehandlung gebleicht, z.B. mit einem chemischen Bleichprozess unter Verwendung von Wasserstoffperoxid oder einem anderen geeigneten Bleichmittel. Alternativ oder zusätzlich können die Korkpartikel gefärbt werden, z.B. um eine lichtstabile, typisch korkartige Färbung zu erhalten.

Zur Vermeidung einer unerwünschten Blasenbildung in der korkhaltigen Schicht wird in einer Ausgestaltung die Prozesstemperatur für die Ausbildung der korkpartikelhaltigen Schicht und die Prozesstemperatur nachfolgender Prozessschritte an die thermogravimetrischen Eigenschaften der Korkpartikel angepasst. Die Prozesstemperatur sollte oberhalb der Temperatur liegen, die für die Trocknung der Korkpartikel benötigt wird, aber unterhalb der Temperatur, bei der eine thermische Zersetzung der Korkpartikel mit Abspaltung gasförmiger Stoffe beginnt. Die Zersetzungstemperatur von Kork ist von der Korkqualität, der Porosität und Zellstruktur abhängig. Beispielsweise wird die Prozesstemperatur unterhalb von 220°C gehalten, vorzugsweise unterhalb von 200°C und besonders bevorzugt unterhalb von 185°C. Wenn die Korkpartikel in einer Schicht der Schichtstruktur enthalten sind, so wird die Prozesstemperatur für die Herstellung dieser Schicht und für alle nachfolgenden Verfahrensschritte an die thermogravimetrischen Daten des Korks angepasst. Durch die vorgeschlagene Verfahrensführung kann eine unerwünschte Blasenbildung aufgrund von volatilen Komponenten im Kork gänzlich unterbunden oder zumindest stark reduziert werden.

Der Anteil an Korkpartikeln in dem Ausgangsmaterial oder in dem Lack kann in Abhängigkeit von Designvorstellungen variiert werden und liegt z.B. in einem Bereich von 0,001 bis 95 Gewichtsprozent. Für die Herstellung eines Kunstleders bzw. einer Folie, das bzw. die den Anforderungen im automobilen Innenraum genügt, ist es vorteilhaft, wenn der Korkpartikelanteil in einem Bereich von 0,001 bis 30 Gewichtsprozent, und vorzugsweise in einem Bereich von 0,001 bis 10 Gewichtsprozent liegt.

In der fertigen korkhaltigen Schicht hängt der Anteil an Korkpartikeln von dem verwendeten Gewichtsanteil im Ausgangsmaterial bzw. im Lack ab und kann beispielsweise in denselben Wertebereichen liegen.

Eine erfindungsgemäße korkpartikelhaltige Folie weist eine Schichtstruktur auf mit mindestens einer Schicht auf Basis von Polyurethan oder Polyvinylchlorid und eine Oberflächenlackierung auf der Schichtstruktur.

Ein erfindungsgemäßes korkpartikelhaltiges Kunstleder weist ein textiles Trägermaterial auf und eine korkpartikelhaltige Folie, die auf dem textilen Trägermaterial angeordnet und mit diesem verbunden ist. Die korkpartikelhaltige Folie hat eine Schichtstruktur mit mindestens einer Schicht auf Basis von Polyurethan oder Polyvinylchlorid und eine Oberflächenlackierung auf der Schichtstruktur.

Das textile Trägermaterial kann beispielsweise ein Gewebe, ein Vlies oder eine Maschenware sein. Das textile Trägermaterial kann beispielsweise aus Naturmaterialien, wie z.B. aus Baumwolle, oder aus Chemiefasern aus natürlichen und synthetischen Rohstoffen, wie z.B. Polyamid, Polyester, oder Glasfasern, aber auch aus Mischformen beider Materialien ausgebildet sein.

Die Schichtstruktur kann eine oder mehrere, übereinander angeordnete Einzelschichten aufweisen. Es können kompakte Schichten oder geschäumte Schichten in der Schichtstruktur enthalten sein oder Kombinationen aus geschäumten und kompakten Schichten. Die Schichtstruktur kann auf ihrer der Oberflächenlackierung abgewandten Seite mit einem Haftvermittler versehen sein. Ebenso kann die Schichtstruktur an ihrer dem textilen Trägermaterial zugewandten Seite mittels einer zusätzlichen Klebeschicht, wie z.B. einem Kaschierstrich, mit dem textilen Trägermaterial verklebt sein.

Die mindestens eine Schicht der Schichtstruktur ist unter Verwendung eines Polyurethans oder eines Polyvinylchlorids ausgebildet. Weist die Schichtstruktur mehrere Schichten auf, so können auch polyurethanhaltige Schichten mit polyvinylhaltigen Schichten kombiniert sein. Die Schichten der Schichtstruktur können aus verschiedenen Materialien ausgebildet sein, beispielsweise kann eine kompakte PVC-Schicht über einer geschäumten PUR-Schicht ausgebildet sein. Die Schicht bzw. die Schichten der Schichtstruktur können neben Polyvinylchlorid oder Polyurethan noch weitere Inhaltsstoffe, wie z.B. Weichmacher, Beschleuniger, Vernetzer oder weitere Zusatzstoffe enthalten. In einer bevorzugten Ausgestaltung beinhaltet die Schicht bzw. die Schichten der Schichtstruktur zumindest einen UV-Stabilisator und/oder einen UV-Filter.

Die Oberflächenlackierung dient dem Schutz des Kunstleders vor chemischen Mitteln, physikalischer Beschädigung, z.B. Kratzern oder Abrieb, und UV-Strahlung. Die Oberflächenlackierung kann weiterhin die Oberflächenhaftung des Kunstleders reduzieren. Zur Ausbildung der Oberflächenlackierung geeignete Lacke sind dem Fachmann bekannt. Beispielsweise eignen sich lösungsmittel- oder wasserbasierte Polyurethane, die mit Isocyanaten quervernetzt sind, oder mit Eigenschaften zur UV-Härtung versehen sind.

Die Oberflächenlackierung ist vorzugsweise über der Schichtstruktur als durchgängige Schicht ausgebildet und bedeckt diese vollständig. Die Oberflächenlackierung ist aus mindestens einer Lackschicht gebildet, kann jedoch aus mehreren Lackschichten gebildet sein, vorzugsweise wird sie aus einer bis vier Lackschichten gebildet.

Die Korkpartikel sind vorzugsweise in der Schichtstruktur angeordnet. Wenn die Schichtstruktur mehr als eine Schicht aufweist, dann können die Korkpartikel in nur einer Schicht oder in mehreren der Schichten angeordnet sein. Alternativ können die Korkpartikel in der Oberflächenlackierung angeordnet sein oder sowohl in der Oberflächenlackierung als auch in der Schichtstruktur angeordnet sein.

Zur Erzielung einer besonderen optischen Wirkung sind die Korkpartikel vorzugsweise so angeordnet, dass sie von der Sichtseite aus zu sehen sind. Die Sichtseite ist dabei die Seite, auf der die Oberflächenlackierung ausgebildet ist. Bei einem Kunstleder ist dies gleichzeitig die dem textilen Trägermaterial gegenüberliegende Seite des Kunstleders. Vorzugsweise sind die Korkpartikel hierzu in einer an die Oberflächenlackierung angrenzenden Schicht der Schichtstruktur eingebettet. In einer alternativen Ausgestaltung können die Korkpartikel so in dem Kunstleder angeordnet sein, dass sie von der Sichtseite aus nicht zu sehen sind. Beispielsweise sind die Korkpartikel hierzu in einer unteren Schicht der Schichtstruktur angeordnet und mindestens eine korkpartikelfreie Schicht ist zwischen der Oberflächenlackierung und der korkpartikelhaltigen Schicht vorgesehen.

Die relativen Begriffe unten, oben, auf oder unter werden in dieser Anmeldung mit Bezug auf eine Folie bzw. ein Kunstleder verwendet, bei der sich die Oberflächenlackierung und damit die Sichtseite oben befindet.

Die Größe der Korkpartikel kann in Abhängigkeit der Dicke und Struktur der Folie bzw. des Kunstleders gewählt werden. die Korkpartikel weisen in einer Ausgestaltung eine Größe in einem Bereich von 1 Mikrometer bis zu 2 Millimeter (mm) auf. Vorzugsweise liegt die Größe der Korkpartikel in einem Bereich von 50 Mikrometer bis zu 1 mm, und besonders bevorzugt in einem Bereich von 100 Mikrometer bis 500 Mikrometer.

Zur Verbesserung der Lichtechtheit enthält die Folie oder das Kunstleder in einer Ausgestaltung zumindest einen UV-Filter und/oder UV-Stabilisator. Hierdurch wird ein UV-Schutz bereitgestellt, der die Korkpartikel vor einem Ausbleichen schützt. Es sind eine Vielzahl von geeigneten UV-Filtern bzw. UV-Stabilisatoren bekannt, wie z.B. Nanopartikel von Titandioxid, welche die UV-Strahlung absorbieren, Nanopartikel von Kalziumcarbonat oder Bariumsulfat, welche UV-Strahlung reflektieren oder andere chemische Stabilisatoren, wie z.B. HALS (hindered amine light stabilizers). Die UV-Filter bzw. Stabilisatoren sind vorzugsweise in der Oberflächenlackierung enthalten. Alternativ oder ergänzend hierzu können die UV-Stabilisatoren bzw. UV-Filter ebenso in der Schichtstruktur, z.B. in einzelnen oder mehreren Schichten der Schichtstruktur, enthalten sein. Die UV-Stabilisatoren bzw. UV-Filter können die Korkpartikel z.B. durchdringen und/oder umhüllen.

Wird PVC als Ausgangsmaterial für die Herstellung der Schichtstruktur verwendet, so beinhaltet die Folie bzw. das Kunstleder in einer bevorzugten Ausgestaltung eine Schichtstruktur auf PVC-Basis, die aus einer geschäumten Schicht und einer auf der geschäumten Schicht angeordneten kompakten Schicht besteht und die Korkpartikel sind in der kompakten Schicht angeordnet. Die Oberflächenlackierung beinhaltet mindestens einen UV-Stabilisator oder UV-Filter. Diese Schichtkombination führt zu einer angenehmen, weichen Haptik bei gleichzeitig neuartiger optischer Wirkung durch die sichtbaren Korkpartikel.

In einer weiteren bevorzugten Ausgestaltung, bei der Polyurethan als Ausgangsmaterial für die Schichtherstellung verwendet wird, beinhaltet die Folie bzw. das Kunstleder eine Schichtstruktur auf Polyurethan-Basis mit mindestens einer ersten kompakten Schicht und einer zweiten kompakten Schicht, die auf der ersten kompakten Schicht ausgebildet ist. Die Korkpartikel sind in der ersten kompakten Schicht angeordnet und die Oberflächenlackierung beinhaltet mindestens einen UV-Stabilisator oder UV-Filter. Die über der korkhaltigen Schicht liegende zweite kompakte Schicht sorgt für eine verbesserte Stabilität der Schichtstruktur. Weiterhin reduziert sie den Anteil an UV-Strahlung, der bis zu den Korkpartikeln vordringt, wodurch die Lichtstabilität weiter verbessert wird.

Zur Erzeugung zusätzlicher optischer Effekte, wie z.B. einer besonders lederartigen Oberflächenstruktur, ist die Folien- bzw. Kunstlederoberfläche, d.h. die Sichtseite, in einer Ausgestaltung mit einer Prägung versehen. Die Prägung kann als herkömmliche Papiernarbe erzeugt werden. Dafür wird das Ausgangsmaterial als PVC- oder PU-Masse auf ein strukturiertes Papier gestrichen. Vorzugsweise wird die Prägung mittels Prägewalze unter Aufbringung von Druck und Temperatur nach der Lackierung in die Kunstleder- bzw. Folienoberfläche eingebracht.

Die korkpartikelhaltige Folie und das korkpartikelhaltige Kunstleder können insbesondere als Bezugsmaterial für den Fahrzeuginnenraum verwendet werden. Die korkpartikelhaltige Folie eignet sich insbesondere zur Kaschierung von steifen Interieurbauteilen, wie z.B. Fahrzeughimmel, Türinnenverkleidung etc. Das korkpartikelhaltige Kunstleder eignet sich für alle Interieurbauteile, die normalerweise mit Kunstleder ausgestattet sind, beispielsweise flache Oberflächen, wie z.B. Sitzflächen, Rücklehnen, Kopfstützen, Instrumententafel und Türverkleidungen, und hervorgehobene Teile, wie z.B. Keder.

Mit dem vorgestellten Verfahren ist es möglich, eine Folie bzw. ein Kunstleder herzustellen, das die besonderen Anforderungen an ein Bezugsmaterial im Fahrzeuginnenraum erfüllt. Beispielsweise müssen diese Materialien eine hohe Kratzbeständigkeit aufweisen, eine hohe Verschleißfestigkeit, ein geringes Anschmutz-und gutes Reinigungsverhalten, sowie Knarzarmut und Emmisionsarmut. Beispielsweise zeigt ein für den Fahrzeuginnenraum geeignetes Kunstleder keinen Farbumschlag bei einer Dreifachbelichtung nach DIN EN ISO 105-B06, keine Beschädigung bei einer Prüfung des Dauerfaltverhaltens nach DIN EN ISO 32100, keine Beschädigung bzw. nur eine leichte Glanzbildung bei einem Martindale-Abriebtest bei bis zu 60.000 Touren und 12 kPa Belastung nach DIN EN ISO 12947-1.

Die korkpartikelhaltige Folie und das korkpartikelhaltige Kunstleder können mit herkömmlichen Anlagen und Verfahren weiterverarbeitet werden, was die Erfindung sehr kostengünstig macht. Beispielsweise kann die Folie bzw. das Kunstleder mit herkömmlichen Schneid- und Nähverfahren weiterverarbeitet werden.

Weitere vorteilhafte Ausgestaltungen der Erfindung ergeben sich aus den Unteransprüchen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele. Sofern in dieser Anmeldung der Begriff "kann" verwendet wird, handelt es sich sowohl um die technische Möglichkeit als auch um die tatsächliche technische Umsetzung.

Im Folgenden werden Ausführungsbeispiele an Hand der beiliegenden Zeichnungen erläutert. Darin zeigen:
- Figur 1: einen schematische Darstellung der Schichtenfolge einer korkpartikelhaltigen Folie gemäß einem ersten Ausführungsbeispiel der Erfindung.
- Figur 2: einen schematische Darstellung der Schichtenfolge eines korkpartikelhaltigen Kunstleders gemäß einem zweiten Ausführungsbeispiel der Erfindung.
- Figur 2A, 2B, 2C: fotografische Abbildungen zweier korkpartikelhaltiger Kunstleder mit einem Aufbau wie in Figur 2 beschrieben.

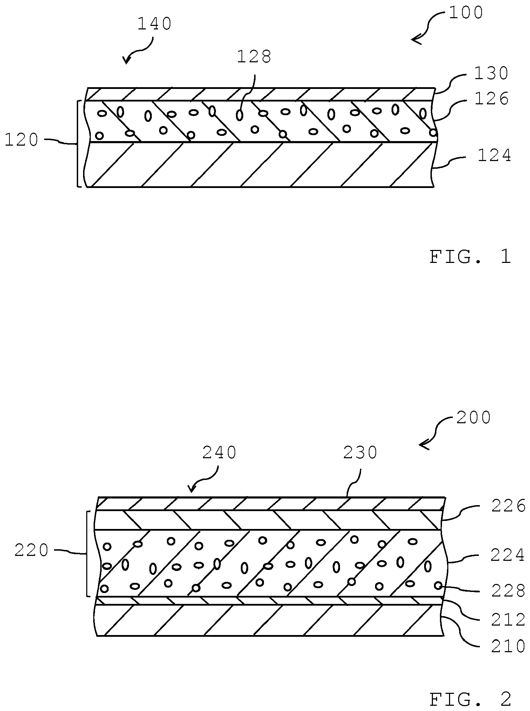

Figur 1 zeigt eine korkpartikelhaltige Folie gemäß einem ersten Ausführungsbeispiel der Erfindung. Die Folie 100 umfasst eine Schichtstruktur 120, die aus einer ersten Schicht 124 und einer darauf angeordneten zweiten Schicht 126 besteht. Die erste Schicht 124 ist als geschäumte Polyvinylchlorid-Schicht ausgebildet. Die zweite Schicht 126 ist als kompakte Polyvinylchlorid-Schicht unmittelbar auf der ersten Schicht 124 angeordnet. Die zweite Schicht 126 enthält Korkpartikel 128. Auf der Schichtstruktur 120 ist eine Oberflächenlackierung 130 aufgebracht. Die Oberflächenlackierung 130 ist aus mindestens einer Schicht eines Lackes ausgebildet und dient zum Schutz des Kunstleders vor chemischen Mitteln, physikalischer Beschädigung, wie z.B. Kratzern, Abrieb, und Alterung durch UV-Strahlen. Die Folie 100 weist auf ihrer Oberseite bzw. Sichtseite 140 eine Narbung auf, die aus Gründen der Vereinfachung in Figur 1 nicht näher dargestellt ist.

Die in Figur 1 dargestellte Folie kann auch auf ein textiles Trägermaterial kaschiert werden bzw. direkt auf diesem ausgebildet werden zur Herstellung eines Kunstleders.

Die Prozesstemperaturen bei der Herstellung des Kunstleders werden anhand der thermogravimetrischen Daten der verwendeten Korkpartikel so eingestellt, dass eine thermische Zersetzung des Korks während der Herstellung des Kunstleders vermieden wird. Die Prozesstemperaturen werden bei der Herstellung der Kunstleder gemäß Figur 1, insbesondere bei der Herstellung der Schichtstruktur und bei der Aufprägung der Oberflächennarbung, unterhalb von 180° Celsius gehalten.

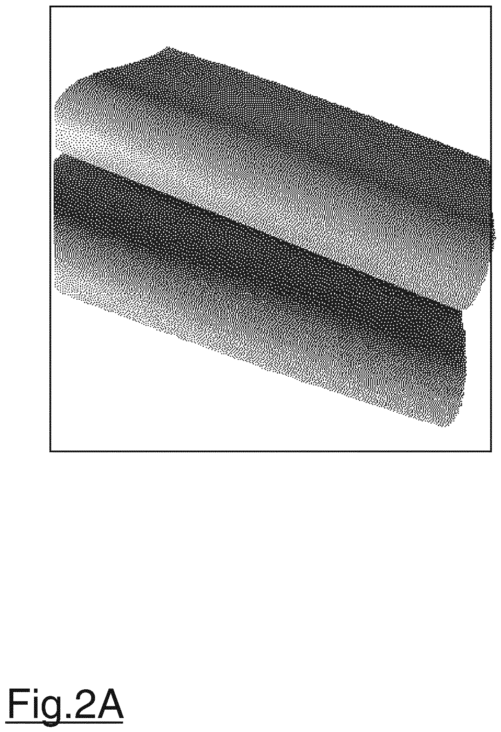

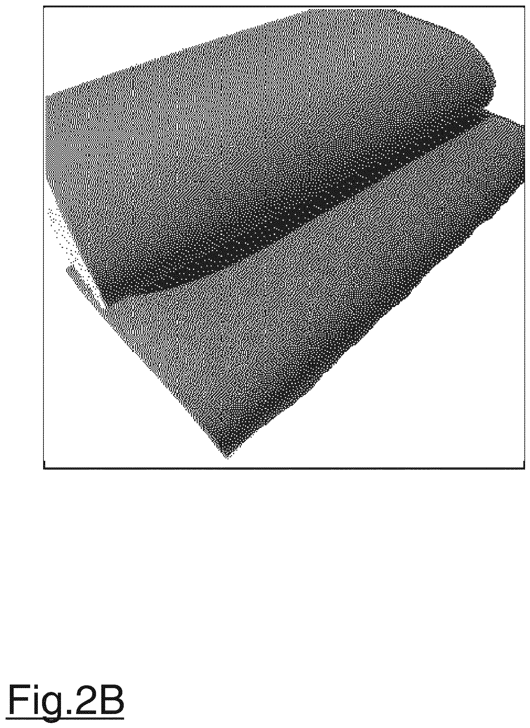

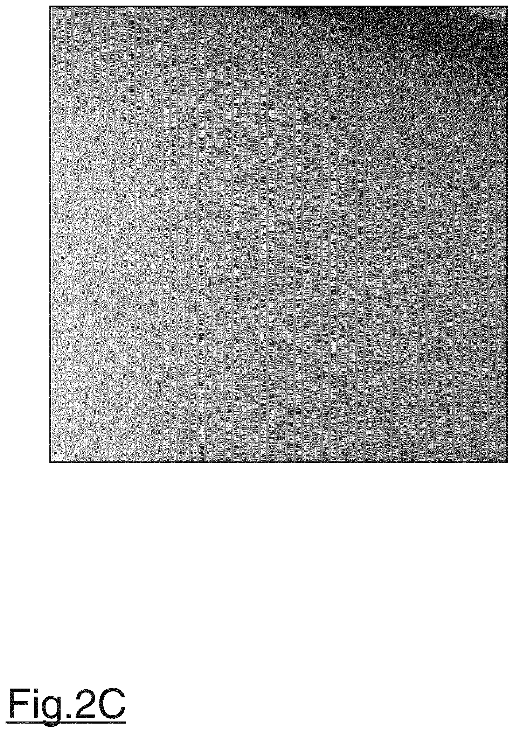

In Figur 2 ist der prinzipielle Aufbau eines korkhaltigen Kunstleders gemäß einem zweiten Ausführungsbeispiel dargestellt.

Das Kunstleder 200 beinhaltet ein textiles Trägermaterial 210. Auf dem textilen Trägermaterial ist eine Schichtstruktur 220 angeordnet und mittels einer Adhäsions- oder Kaschierschicht 212 mit dieser verbunden. Die Schichtstruktur 220 besteht aus einer ersten Schicht 224 sowie einer auf der ersten Schicht 224 angeordneten zweiten Schicht 226. Das textile Trägermaterial 210 kann -zumindest teilweise - in die Klebe- bzw. Kaschierschicht 212 eingebettet sein. Die erste Schicht 224 ist als kompakte Polyurethanschicht ausgebildet und enthält Korkpartikel 228. Die zweite Schicht 226 ist als kompakte Polyurethanschicht unmittelbar auf der ersten Schicht 224 ausgebildet und ist korkpartikelfrei. Auf der Schichtstruktur 220 bzw. der zweiten Schicht 226 weist das Kunstleder 200 eine Oberflächenlackierung 230 auf. Die Oberflächenlackierung 230 dient zum Schutz des Kunstleders vor chemischen Mitteln, physikalischer Beschädigung, wie z.B. Kratzern, Abrieb, und Alterung durch UV-Strahlen. Die Seite mit der Oberflächenlackierung 230 bildet die Sichtseite 240 des Kunstleders 200. Auf der Sichtseite 240 weist das Kunstleder 200 eine Narbung auf, die aus Gründen der Vereinfachung in Figur 2 nicht näher dargestellt ist.

Die Figuren 2A und 2B zeigen eine fotographische Darstellung zweier korkhaltiger Kunstleder mit einem Schichtaufbau wie er in Figur 2 dargestellt ist. Als Trägermaterial wurde ein Gewirke aus 50 Gewichtsprozent Baumwolle und 50 Gewichtsprozent Polyester mit einem Gewicht von 260 g/m² gewählt. Die Schichtstruktur weist eine erste kompakte Polyurethanschicht sowie eine darauf angeordnete zweite kompakte Polyurethanschicht auf. Die erste kompakte Schicht enthält Korkpartikel mit einer Größe im Bereich von 50 bis 420 Mikrometer und einer durchschnittlichen Größe von 180 Mikrometern. Die korkpartikelhaltige Schicht hat eine Dicke bzw. Höhe von ca. 0,35 mm. Die darauf angeordnete zweite kompakte Schicht hat eine Dicke von ca. 0,04 mm. Auf der dem Trägermaterial gegenüberliegenden Seite weist das Korkleder eine Oberflächenlackierung zur Materialveredelung auf. Die Oberflächenlackierung besteht aus einem polyurethanbasierten Lack, dem zusätzliche UV-Stabilisatoren und UV-Filter zugegeben sind. Die Oberflächenlackierung hat eine Dicke von ca. 10 Mikrometer. Die Gesamtdicke des Kunstleders aus den Figuren 2A und 2B liegt bei ca. 1,22 mm.

Zur Herstellung der in den Figuren 2A und 2B gezeigten Kunstleder wurde zunächst auf einem Trägerpapier ein erster Strich einer PU-Paste mittels Rakel aufgetragen und vernetzt. Darauf wurde ein zweiter PU-Strich aufgetragen und ebenfalls vernetzt. Der zweite Strich enthielt Korkpartikel in einem Gewichtsanteil von 3 Gewichtsprozent. Die unterschiedliche, graue bzw. blaue Farbgebung der Kunstleder wurde durch Zugabe von schwarzen bzw. blauen Farbpigmenten in die Ausgangsmaterialien für die kompakten Schichten erzielt.

Auf den zweiten Strich wurde ein Klebestrich aufgetragen und das textile Trägermaterial in den noch feuchten Klebestrich einkaschiert. Anschließend wurde das Kunstleder durch Erhitzung vernetzt. Im Anschluss daran wurde das Trägerpapier entfernt und die Oberflächenlackierung mittels Tiefdruck in mehreren Arbeitsschritten aufgebracht. Das Kunstleder wurde mit einer Oberflächennarbung versehen. Hierzu wurde ein strukturiertes Trägerpapier verwendet. Die Oberflächennarbung ist in Figur 2C gut zu erkennen, welche eine vergrößerte Ansicht der Oberfläche des grauen Kunstleders aus den Figuren 2A und 2B zeigt.

Weiterhin wurden die verwendeten Korkpartikel vorbehandelt, bevor sie der Polyurethan-Paste zugegeben wurden. Die Korkpartikel wurden in einem Ofen für eine Stunde bei 120°C getrocknet.

Das mit diesem Verfahren hergestellte Kunstleder erfüllt die hohen Anforderungen, die an ein Bezugsmaterial für den Fahrzeuginnenraum gestellt werden. Insbesondere konnte eine hohe Lichtechtheit des Materials erreicht werden. Ebenso konnten die Farbtoleranzen reduziert werden. Farbmessungen an ungeschützten und unbehandelten Korkpartikeln ergaben einen Gesamtfarbabstand von dE*=15, was einem Graumaßstab nach DIN EN 20105-A02 Stufe 1 entspricht. Demgegenüber konnte für das korkhaltige Kunstleder ein Graumaßstab Stufe 4 (entspricht ungefähr dE*=2) ermittelt werden.

Obwohl das in Figur 2 gezeigte Ausführungsbeispiel eine Kaschierschicht aufweist, ist es ebenso möglich, das Kunstleder ohne Kaschierschicht herzustellen, z.B. durch Direktbeschichtung oder Kalanderverfahren.

Ebenso kann die in Figur 2 gezeigte Schichtstruktur 220 mit Oberflächenlackierung 230 durch Weglassen der Kaschierung, also Weglassen des textilen Trägermaterials 210 und des Kaschierstrichs 212, als Folie ausgebildet werden.

Die Erfindung ist nicht auf die in den Ausführungsbeispielen gezeigten Schichtfolgen beschränkt, ebenso sind auch andere Schichtstrukturen möglich. Die Schichtstruktur kann auf Polyurethanbasis ausgebildet sein, es können aber ebenso Polyvinylchloride für die Ausbildung der Schichtstruktur verwendet werden, oder sowohl Polyurethane als auch Polyvinylchloride, z.B. in verschiedenen Schichten.

Die Ausführungsbeispiele sind nicht maßstabsgetreu und nicht beschränkend. Abwandlungen im Rahmen des fachmännischen Handelns sind möglich.

### Bezugszeichenliste

- 100: Folie
- 120: Schichtstruktur
- 124: erste Schicht
- 126: zweite Schicht
- 128: Korkpartikel
- 130: Oberflächenlackierung
- 140: Sichtseite
- 200: Kunstleder
- 210: textiles Trägermaterial
- 212: Adhäsionsschicht
- 220: Schichtstruktur
- 224: erste Schicht
- 226: zweite Schicht
- 228: Korkpartikel
- 230: Oberflächenlackierung
- 240: Sichtseite

## Patentansprüche

1. Verfahren zur Herstellung einer korkpartikelhaltigen Folie (100) oder eines korkpartikelhaltigen Kunstleders (200) mit einer Schichtstruktur (120; 220) mit mindestens einer Schicht (126; 224) auf Basis von Polyurethan oder Polyvinylchlorid und einer Oberflächenlackierung (130; 230) mit den Schritten:
Vorbehandlung der Korkpartikel (128; 228) zur Reduzierung des Wasseranteils in den Korkpartikeln,
Zubereiten eines Ausgangsmaterials zur Schichtherstellung,
Herstellen der Schichtstruktur (120; 220), wobei zumindest eine Schicht (126, 224) der Schichtstruktur (120; 220) aus dem Ausgangsmaterial ausgebildet wird und
Ausbilden der Oberflächenlackierung (130; 230) durch Aufbringen eines Lackes auf der Schichtstruktur (120; 220),
wobei die Korkpartikel (128, 228) in das Ausgangsmaterial oder in den Lack oder in das Ausgangsmaterial und den Lack eingemischt sind.

2. Verfahren nach Patentanspruch 1, wobei
die Vorbehandlung eine Trocknung der Korkpartikel (128; 228) beinhaltet.

3. Verfahren nach Patentanspruch 1 oder 2, wobei
die Korkpartikel (128; 228) im Rahmen der Vorbehandlung in einer Art erhitzt werden, dass zumindest teilweise eine Explosion der Korkpartikel stattfindet.

4. Verfahren nach Patentanspruch 3, wobei die Explosion der Korkpartikel (128; 228) herbeigeführt wird durch einen oder mehrere der Schritte:
- Wärmeübertragung auf die Korkpartikel (128; 228),
- Bestrahlen der Korkpartikel (128; 228) mit Mikrowellenstrahlung, oder
- Bestrahlen der Korkpartikel (128; 228) mit Ultraschall.

5. Verfahren nach einem der Patentansprüche 2 bis 4, bei dem
die getrockneten oder explodierten Korkpartikel (128; 228) in einem vordefinierten Zeitrahmen weiterverarbeitet werden, so dass der Wassergehalt in den Korkpartikeln unter einem vorgegebenen Restfeuchtegehalt bleibt.

6. Verfahren nach einem der Patentansprüche 1 bis 5, wobei die Korkpartikel (128; 228) im Rahmen der Vorbehandlung mit einer Flüssigkeit aus der Gruppe der Weichmacher oder organischen Lösungsmittel durchtränkt werden.

7. Verfahren nach Patentanspruch 6, wobei der Flüssigkeit weiterhin zumindest ein UV-Stabilisator und/oder UV-Filter zugesetzt ist.

8. Verfahren nach einem der Patentansprüche 6 oder 7,
bei dem die Mischung aus Korkpartikeln (128; 228) und Flüssigkeit im Rahmen der Vorbehandlung vakuumiert wird.

9. Verfahren nach einem der vorangehenden Patentansprüche, bei dem die Korkpartikel (128; 228) im Rahmen der Vorbehandlung gebleicht werden oder gefärbt werden oder sowohl gebleicht als auch gefärbt werden.

10. Verfahren nach einem der Patentansprüche 1 bis 9,
bei dem die Prozesstemperatur für die Ausbildung der korkpartikelhaltigen Schicht (126, 224) und die Prozesstemperatur nachfolgender Prozessschritte an die thermogravimetrischen Eigenschaften der Korkpartikel angepasst ist, wobei die Prozesstemperatur oberhalb der Temperatur liegt, die für die Trocknung der Korkpartikel benötigt wird, aber unterhalb der Temperatur, bei der eine thermische Zersetzung der Korkpartikel mit Abspaltung gasförmiger Stoffe beginnt.

11. Verfahren nach einem der vorangehenden Patentansprüche, bei dem der Anteil an Korkpartikeln (128; 228) in dem Ausgangsmaterial oder in dem Lack in einem Bereich von 0,001 bis 30 Gewichtsprozent oder in einem Bereich von 0,001 bis 10 Gewichtsprozent liegt.

12. Folie, hergestellt durch ein Verfahren nach einem der vorangegangenen Ansprüche, mit
einer Schichtstruktur (120) mit mindestens einer Schicht (124) auf Basis von Polyurethan oder Polyvinylchlorid, und
einer Oberflächenlackierung (130) auf der Schichtstruktur (120),
wobei die Folie (100) Korkpartikel (128) beinhaltet.

13. Kunstleder, hergestellt durch ein Verfahren nach einem der vorangegangenen Ansprüche 1 bis 11, mit
einem textilen Trägermaterial (210), und
einer Folie, die auf dem textilen Trägermaterial angeordnet und mit diesem verbunden ist, wobei die Folie eine Schichtstruktur (220) mit mindestens einer Schicht (224) auf Basis von Polyurethan oder Polyvinylchlorid, und eine Oberflächenlackierung (230) auf der Schichtstruktur (220) aufweist, und
wobei die Folie Korkpartikel (228) beinhaltet.

14. Folie oder Kunstleder nach einem der vorangehenden Patentansprüche, bei dem die Korkpartikel (128; 228) so angeordnet sind, dass sie von der Sichtseite (140; 240) der Folie oder des Kunstleders aus zu sehen sind, wobei die Sichtseite die Seite ist, auf der die Oberflächenlackierung ausgebildet ist.

15. Folie oder Kunstleder nach einem der vorangehenden Patentansprüche, bei dem die Korkpartikel (128; 228) eine Größe in einem Bereich von 1 Mikrometer bis zu 2 mm aufweisen, oder eine Größe in einem Bereich von 50 Mikrometer bis zu 1 mm, oder in einem Bereich von 100 Mikrometer bis 500 Mikrometer.

16. Folie oder Kunstleder nach einem der vorangehenden Patentansprüche, die oder das mindestens einen UV-Stabilisator oder UV-Filter beinhaltet, der die Korkpartikel (128; 228) vor einem Ausbleichen schützt.

17. Folie oder Kunstleder nach einem der vorangehenden Patentansprüche, wobei
die Schichtstruktur (120) auf Polyvinylchlorid-Basis ausgebildet ist und aus einer geschäumten Schicht (124) und einer auf der geschäumten Schicht (124) angeordneten kompakten Schicht (126) besteht,
die Korkpartikel (128) in der kompakten Schicht (126) angeordnet sind und die Oberflächenlackierung (130) mindestens einen UV-Stabilisator oder UV-Filter beinhaltet.

18. Folie oder Kunstleder nach einem der vorangehenden Patentansprüche, wobei
die Schichtstruktur (220) auf Polyurethan-Basis ausgebildet ist und mindestens eine erste kompakte Schicht (224) und eine zweite kompakte Schicht (226) beinhaltet, die auf der ersten kompakten Schicht (224) ausgebildet ist,
die Korkpartikel (228) in der ersten kompakten Schicht (224) angeordnet sind und
die Oberflächenlackierung (230) mindestens einen UV-Stabilisator oder UV-Filter beinhaltet.

19. Verwendung der Folie oder des Kunstleders nach einem der Patentansprüche 12 bis 18 als Bezugsmaterial für ein Interieurbauteil im Fahrzeuginnenraum.

## Claims

1. A method for producing a film (100) containing cork particles or an artificial leather (200) containing cork particles, having a layered structure (120; 220) with at least one layer (126; 224) based on polyurethane or polyvinylchloride and a surface coating (130; 230) comprising the following steps:
pretreating the cork particles (128; 228) in order to reduce the water content in the cork particles,
preparing a starting material for producing the layers,
producing the layered structure (120; 220), wherein at least one layer (126, 224) of the layered structure (120; 220) is made of the starting material and
forming the surface coating (130; 230) by applying varnish onto the layered structure (120; 220),
wherein the cork particles (128, 228) are mixed into the starting material or into the varnish or into both the starting material and the varnish.

2. The method of claim 1, wherein
the pretreatment comprises drying the cork particles (128; 228).

3. The method of claim 1 or 2, wherein
the cork particles (128; 228) are heated during the pretreatment in such a way, that at least a partial explosion of cork particles takes place.

4. The method of claim 3, wherein the explosion of cork particles (128; 228) is caused by one or more of following steps:
- transmitting heat to the cork particles (128; 228),
- irradiating the cork particles (128; 228) with microwave radiation, or
- irradiating the cork particles (128; 228) with ultrasound.

5. The method of any of claims 2 to 4, wherein
the dried or exploded cork particles (128; 228) are subject to further processing within a defined time frame, so that the water content in the cork particles remains below a predetermined residual humidity content.

6. The method of any of claims 1 to 5, wherein the cork particles (128; 228) are imbued during pretreatment with a liquid from the group of softeners or organic solvents.

7. The method of claim 6, wherein at least one UV-stabilizer and/or UV-filter is also added to the liquid.

8. The method of any of claims 6 or 7,
wherein the mixture of cork particles (128; 228) and liquid is placed under a vacuum during the pretreatment.

9. The method of any of the preceding claims, wherein the cork particles (128; 228) are bleached or dyed or both bleached and dyed during pretreatment.

10. The method of any of claims 1 to 9,
wherein the process temperature for forming the cork particles containing layer (126, 224) and the process temperature of following process steps are adapted to the thermogravimetric properties of the cork particles, wherein the process temperature lies above the temperature required for drying the cork particles, but below the temperature, at which a thermal decomposition of the cork particles with separation of gaseous substances begins.

11. The method of any of the preceding claims, wherein the percentage of cork particles (128; 228) in the starting material or in the varnish lies within a range from 0.001 to 30 %-weight or within a range from 0.001 to 10 %-weight.

12. A film produced by a method of any of the preceding claims, having
a layered structure (120) with at least one layer (124) based on polyurethane or polyvinylchloride, and
a surface coating (130) over the layered structure (120),
wherein the film (100) contains cork particles (128).

13. An artificial leather produced by a method of any of the preceding claims 1 to 11, having
a textile support material (210), and
a film, which is applied over the textile support material and is joined therewith, wherein the film has a layered structure (220) having at least one layer (224) based on polyurethane or polyvinylchloride, and a surface coating (230) over the layered structure (220),
wherein the film contains cork particles (228).

14. The film or artificial leather of any of the preceding claims, wherein the cork particles (128; 228) are arranged in such a way, that they are visible from the viewing side (140; 240) of the film or artificial leather, wherein the viewing side is the side on which the surface varnish is formed.

15. The film or artificial leather of any of the preceding claims, wherein the cork particles (128; 228) have a size in a range from 1 micrometer to 2 mm, or a size in a range from 50 micrometer to 1 mm, or in a range from 100 micrometer to 500 micrometer.

16. The film or artificial leather of any of the preceding claims, containing at least one UV-stabilizer or an UV-filter, which protects the cork particles (128; 228) from discoloring.

17. The film or artificial leather of any of the preceding claims, wherein
the layered structure (120) is produced on the basis of polyvinylchloride and is composed of a foamed layer (124) and a compact layer (126) which is applied onto the foamed layer (124),
the cork particles (128) are arranged in the compact layer (126) and the surface coating (130) contains at least one UV-stabilizer or UV-filter.

18. The film or artificial leather of any of the preceding claims, wherein
the layered structure (220) is produced on the basis of polyurethane and contains at least one first compact layer (224) and one second compact layer (226), which is formed on the first compact layer (224),
the cork particles (228) are arranged in the first compact layer (224) and
the surface coating (230) contains at least one UV-stabilizer or UV-filter.

19. Use of the film or artificial leather of any of claims 12 to 18, as a reference material for an interior component within the passenger compartment of a vehicle.

## Revendications

1. Procédé de fabrication d'un film (100) contenant des particules de liège ou d'un similicuir (200) contenant des particules de liège présentant une structure stratifiée (120 ; 220) pourvue d'au moins une couche (126 ; 224) à base de polyuréthane ou de chlorure de polyvinyle et d'un laquage de surface (130 ; 230), le procédé comprenant les étapes consistant à :
prétraiter les particules de liège (128 ; 228) pour réduire la teneur en eau dans les particules de liège,
préparer un matériau de base pour la fabrication de couches,
réaliser la structure stratifiée (120 ; 220), au moins une couche (126, 224) de la structure stratifiée (120 ; 220) étant formée à partir du matériau de base et
former le laquage de surface (130 ; 230) par application d'une laque sur la structure stratifiée (120 ; 220),
les particules de liège (128, 228) étant incorporées dans le matériau de base ou dans la laque ou dans le matériau de base et la laque.

2. Procédé selon la revendication 1, dans lequel
le prétraitement comprend un séchage des particules de liège (128 ; 228).

3. Procédé selon la revendication 1 ou 2, dans lequel
les particules de liège (128 ; 228) sont chauffées dans le cadre du prétraitement de façon à produire une explosion au moins partielle des particules de liège.

4. Procédé selon la revendication 3, dans lequel l'explosion de particules de liège (128 ; 228) est provoquée par une ou plusieurs des étapes consistant à :
- transférer de la chaleur aux particules de liège (128 ; 228),
- irradier les particules de liège (128 ; 228) avec un rayonnement micro-ondes, ou
- irradier les particules de liège (128 ; 228) avec des ultrasons.

5. Procédé selon l'une quelconque des revendications 2 à 4, dans lequel
les particules de liège séchées ou éclatées (128 ; 228) subissent un autre traitement dans un laps de temps prédéfini, de sorte que la teneur en eau dans les particules de liège reste inférieure à une teneur en humidité résiduelle prédéterminée.

6. Procédé selon l'une quelconque des revendications 1 à 5, dans lequel les particules de liège (128 ; 228) sont imprégnées avec un liquide du groupe des plastifiants ou des solvants organiques dans le cadre du prétraitement.

7. Procédé selon la revendication 6, dans lequel on ajoute en outre au liquide au moins un stabilisant anti-UV et/ou un filtre anti-UV.

8. Procédé selon l'une quelconque des revendications 6 ou 7,
dans lequel le mélange de particules de liège (128 ; 228) et de liquide est mis sous vide dans le cadre du prétraitement.

9. Procédé selon l'une quelconque des revendications précédentes, dans lequel les particules de liège (128 ; 228) sont blanchies ou colorées, ou bien blanchies et colorées, dans le cadre du prétraitement.

10. Procédé selon l'une quelconque des revendications 1 à 9,
dans lequel la température de processus pour former la couche (126, 224) contenant des particules de liège et la température de processus des étapes de processus ultérieures sont adaptées aux propriétés thermogravimétriques des particules de liège, la température de processus étant supérieure à la température requise pour le séchage des particules de liège, mais inférieure à la température à laquelle commence une décomposition thermique des particules de liège avec élimination de substances gazeuses.

11. Procédé selon l'une quelconque des revendications précédentes, dans lequel la proportion de particules de liège (128 ; 228) dans le matériau de base ou dans la laque se situe dans la gamme allant de 0,001 à 30 % en poids, ou dans la gamme allant de 0,001 à 10 % en poids.

12. Film fabriqué par un procédé selon l'une quelconque des revendications précédentes, comportant
une structure stratifiée (120) pourvue d'au moins une couche (124) à base de polyuréthane ou de chlorure de polyvinyle, et
un laquage de surface (130) sur la couche stratifiée (120), le film (100) contenant des particules de liège (128).

13. Similicuir fabriqué par un procédé selon l'une quelconque des revendications 1 à 11 ci-dessus, comprenant
un matériau textile de support (210), et
un film disposé sur le matériau textile de support et relié à celui-ci, dans lequel le film ayant une structure stratifiée (220), pourvue d'au moins une couche (224) à base de polyuréthane ou de chlorure de polyvinyle, et un laquage de surface (230) sur la structure stratifiée (220), et
le film contenant des particules de liège (228).

14. Film ou similicuir selon l'une quelconque des revendications précédentes, dans lequel les particules de liège (128 ; 228) sont disposées de façon à être vues depuis le côté visible (140 ; 240) du film ou du similicuir, le côté visible étant le côté sur lequel est formé le laquage de surface.

15. Film ou similicuir selon l'une quelconque des revendications précédentes, dans lequel les particules de liège (128 ; 228) ont une taille dans la gamme allant de 1 micromètre à 2 mm, ou une taille dans la gamme allant de 50 micromètres à 1 mm, ou dans la gamme allant de 100 micromètres à 500 micromètres.

16. Film ou similicuir selon l'une quelconque des revendications précédentes, qui comprend au moins un stabilisant anti-UV ou filtre anti-UV protégeant les particules de liège (128 ; 228) de la décoloration.

17. Film ou similicuir selon l'une quelconque des revendications précédentes, dans lequel
la structure stratifiée (120) est formée à base de chlorure de polyvinyle et constituée d'une couche alvéolaire (124) et d'une couche compacte (126) disposée sur la couche alvéolaire (124),
les particules de liège (128) sont disposées dans la couche compacte (126) et
le laquage de surface (130) comprend au moins un stabilisant anti-UV ou un filtre anti-UV.

18. Film ou similicuir selon l'une quelconque des revendications précédentes, dans lequel
la structure stratifiée (220) est formée à base de polyuréthane et comprend au moins une première couche compacte (224) et une seconde couche compacte (226), formée sur la première couche compacte (224),
les particules de liège (228) sont disposées dans la première couche compacte (224) et
le laquage de surface (230) comprend au moins un stabilisant anti-UV ou un filtre anti-UV.

19. Utilisation du film ou du similicuir selon l'une quelconque des revendications 12 à 18 comme matériau de revêtement destiné à un élément structurel intérieur de l'habitacle d'un véhicule.
